# EUROPÄISCHE PATENTANMELDUNG

(11) **EP 4 686 712 A1**
(43) Veröffentlichungstag der Anmeldung: **04.02.2026**
(21) Anmeldenummer: 24192266.5
(22) Anmeldetag: 01.08.2024
(51) Int. Cl.: C04B 28/06, C04B 111/60, C04B 111/62

(54) **SCHNELLHÄRTENDE ZEMENTSYSTEME**

(71) Anmelder: Zinnwald Lithium GmbH, 09599 Freiberg (DE); Papenburg Entsorgung Ost GmbH, 06112 Halle (Saale) (DE); ITEL Deutsches Lithiuminstitut GmbH, 06108 Halle (Saale) (DE)
(72) Erfinder: NEUMANN, Andreas, 91338 Igensdorf (DE); SCHULZ, Jan Hendrik, 04109 Leipzig (DE); HEILMANN, Andreas, 04288 Leipzig (DE); DU PLESSIS, Anton, MW6 3AH London (GB); BLUM, Ulrich, 96190 Untermerzbach (DE); ROGGENDORF, Hans, 06132 Halle (Saale) (DE)
(74) Vertreter: dompatent

(57) **Zusammenfassung**

Schnellhärtendes Zementsystem enthaltend
- 70 bis 95 MA.-% Tonerdezement
- 5 bis 30 MA.-% lithiumhaltige Rückstände aus der Laugung von Lithiumerzen.

## Beschreibung

Die vorliegende Erfindung betrifft schnellhärtende Zementsysteme und Estrichmörtel oder Beton, die das schnellhärtende Zementsystem verwenden.

Zement ist ein anorganischer, nicht metallischer Baustoff und wird in verschiedenen Ausführungsformen bereits seit der Antike insbesondere zur Herstellung von Baustoffen wie Mörtel oder Beton verwendet.

In Europa werden Zemente in der europäischen Norm EN 197 geregelt, die im Wesentlichen verschiedene Festigkeitsklassen unterscheidet. Nebenbei wird auch die Zusammensetzung klassifiziert. Dies sind
- CEM I Portland Zement
- CEM II Portland Komposit Zement
- CEM III Hochofenzement
- CEM IV Pozzolan Zement
- CEM V Komposit Zement

Zusätzlich gibt es sogenannte Sonderzemente, wie beispielsweise Schnellzement, Tonerdezement, Trass-Zement usw., die für verschiedenste Anwendungen eingesetzt werden.

Typisch an Zement ist, dass die Festigkeit über einen längeren Zeitraum zunimmt und die Endfestigkeit häufig erst nach 28 Tagen erreicht wird. Gerade im Bereich der Estriche ist eine schnelle Erhärtung wünschenswert, um an der Baustelle weiterarbeiten zu können.

Es sind verschiedene schnellhärtende Zementsysteme bekannt, jedoch besteht immer Bedarf nach alternativen Zementsystemen, die zementtypische Eigenschaften - insbesondere Festigkeit, Verarbeitbarkeit, Härtungseigenschaften - für Anwendungen in optimaler Weise kombinieren.

Aufgabe war es, solche Zementsysteme bereitzustellen.

Gelöst wird die Aufgabe durch ein schnellhärtendes Zementsystem enthaltend
- 70 bis 95 MA.-% Tonerdezement
- 5 bis 30 MA.-% lithiumhaltige Rückstände aus der Laugung von Lithiumerzen.

Die Laugung von Lithiumerzen produziert Reststoffe, die häufig erhebliche Mengen ausmachen. Bei Gehalten von Lithium von typischerweise kleiner 5 MA.-% verbleiben zwangsläufig bei der Lithiumgewinnung entsprechende Mengen Reststoffe. Diese Rückstände aus der Laugung von Lithiumerzen können durch das erfindungsgemäße Zementsystem in besonders nützlicher Weise verwendet werden. Die Rückstände enthalten typischerweise noch Restmengen Lithium. Diese können je nach Laugungsverfahren zwischen 0,5 und 0,6 MA.-% , bevorzugt 0,1 bis 0,5 MA.-% liegen.

Eine bevorzugte Quelle für die lithiumhaltige Rückstände entsteht aus der Laugung von Zinnwaldit.

Zinnwaldithaltige Erze werden typischerweise im Untertagebergbau gewonnen. Anschließend erfolgt ein Brechen und Mahlen sowie eine Magnetabscheidung. Eine typische Laugung von Zinnwaldit umfasst folgende Schritte:
a) Calcinieren des gemahlen Erzes mit Gips und Kalkstein
b) Laugung mit Wasser, wodurch Lithiumionen in Lösung gehen
c) Abtrennen des Laugungsrückstandes
d) Zugabe von Kaliumcarbonat, wodurch Lithiumcarbonat entsteht und Kaliumsulfat ausfällt
e) Abtrennen des Niederschlags von Kaliumsulfat
f) Umwandeln des Lithiumcarbonats in Lithiumhydroxid, durch Zugabe von Calciumhydroxid, wobei Calciumcarbonat ausfällt.

Die in Schritt c) erhaltenen Laugungsrückstände sind erfindungsgemäß einsetzbar. Solche Laugungsrückstände entstehen auch in anderen Prozessen zur Aufarbeitung von lithiumhaltigen Erzen.

Solche lithiumhaltigen Rückstände enthalten in vielen Fällen Quarz, Feldspat und weitere Minerale, die im Zuge der Prozessierung auftreten, z.B. Fluorit, Cuspidin, Granat, Pyroxen, Melilith und Mischungen.

Der eingesetzte Tonerdezement entspricht typischerweise den Vorgaben der DIN EN 14647. In einigen Fällen liegt der Gehalt an Tonerdezement im Bereich von 80 bis 90 MA.-% . Der Gehalt an lithiumhaltige Rückständen liegt bevorzugt zwischen 10 und 20 MA.-% .

Gegenstand der Erfindung ist auch ein Estrich, Mörtel oder Beton, der das schnellhärtende Zementsystem sowie Zuschlagstoffe enthält.

Typische Zusammensetzungen sind 3 bis 70 MA.-% des schnellhärtenden Zementsystems und 30 bis 95 MA.-% Gesteinskörnung.

Für einen Estrich wird es gelegentlich sinnvoll sein, weitere Zemente zu zufügen, insbesondere Normalzemente nach DIN EN 197-1.

Die Gesteinskörnungen, die erfindungsgemäß eingesetzt wird, entspricht typischerweise der DIN EN 12620. Diese enthält einen geringen Feinanteil (typischerweise ≤ 3 MA-%). Für einen Estrich sollte das Größtkorn möglichst groß gewählt werden. Für eine Estrichdicke < 40 mm darf aber beispielsweise das Größtkorn nicht oberhalb von 8 mm liegen.

Die erfindungsgemäßen Materialien werden durch die folgenden Beispiele näher erläutert.

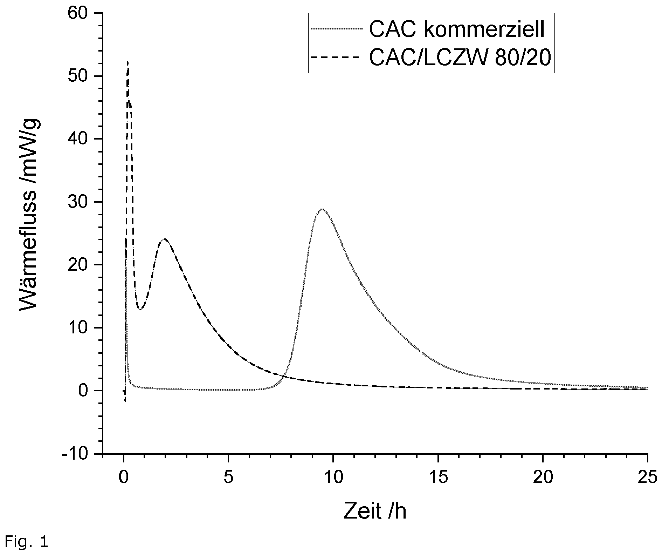

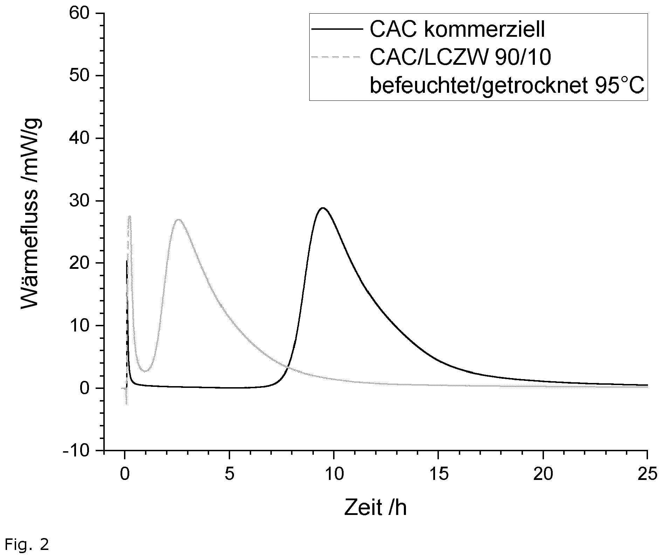

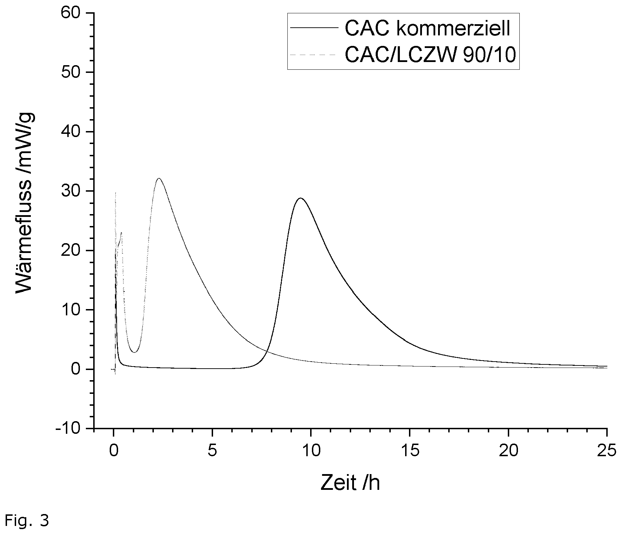

Figuren 1 bis 3 zeigen die Wärmeflussmessung in Abhängigkeit von der Zeit für verschiedene Mischungen von Tonerdezement mit dem erfindungsgemäßen Produkt.
- schwarze durchgezogenen Kurve: Referenz: Reiner CAC-Zement (Kerneos Ciment Fondu) ohne Zugabestoffe, CAC: Calcium-Aluminate-Cement (CAC) (Figur 1 bis 3)
- graue gestrichelte Kurve: CAC/LCZW 80/20: CAC (80%) / Leach-Calcine Zinnwaldite (20%) (Figur 1)
- graue gestrichelte Kurve CAC/LCZW 90/10: CAC (90%) / Leach-Calcine Zinnwaldite (10%) vorher befeuchtet und bei 95 °C getrocknet (Figur 2)
- graue gestrichelte Kurve CAC/LCZW 90/10: CAC (90%) / Leach-Calcine Zinnwaldite (10%) Figur 3

### Beispiel 1

Zinnwalditerz wurde gebrochen, gemahlen und mit Gips und Kalkstein calciniert. Das calcinierte Produkt wurde mit Wasser gelaugt. Die Lösung enthielt mehr als 90 % des enthaltenden Lithiums. Es verblieb ein Laugungsrückstand, der als 'Leach-Calcine Zinnwaldite' bzw. LCZW bezeichnet wurde. Er enthielt 0,224 MA.-% Lithium. Aus der Röntgenbeugungsanalyse konnte auf die Anwesenheit auf Gips, Cuspidin, Granat, Flourit, Topas und Bytownit geschlossen werden.

Es wurden Proben untersucht von Tonerdezement (CAC) in Mischung mit dem erfindungsgemäßen Lithium-Laugungsrückstand. Alle Mischung wurden mit einem Wasser/Zementverhältnis von 0,5 angesetzt.

Es zeigt sich, dass - wie aus Figur 1 bis 3 ersichtlich- durch Zugabe von 10 bis 20 MA.-% gelaugten Reststoffe aus der Zinnwaldlaugung (LCZW - Leached Calcine Zinnwaldit) zu einem kommerziellen Tonerdezement das Maximum des Wärmeflusses von ca. 10 Stunden (Referenz schwarze durchgezogene Kurve in den Figuren 1-3) auf 2-2,5 Stunden nach vorne verschoben wird.

Durch eine Anfeuchtung/Trocknung des Rückstandes oder eine Erhöhung der Menge lassen sich nur noch geringfügig stärkere Effekte erreichen.

## Patentansprüche

1. Schnellhärtendes Zementsystem enthaltend
- 70 bis 95 MA.-% Tonerdezement
- 5 bis 30 MA.-% lithiumhaltige Rückstände aus der Laugung von Lithiumerzen.

2. Schnellhärtendes Zementsystem nach Anspruch 1, wobei die lithiumhaltigen Rückstände 0,05 bis 0,6 MA.-% Lithium enthalten.

3. Schnellhärtendes Zementsystem nach Anspruch 2, wobei die lithiumhaltigen Rückstände 0,1 bis 0,5 MA.-% Lithium enthalten.

4. Schnellhärtendes Zementsystem nach einem der vorherigen Ansprüche, wobei die lithiumhaltigen Rückstände aus der Laugung von Zinnwaldit sind.

5. Schnellhärtender Zement nach einem der vorherigen Ansprüche, wobei die lithiumhaltigen Rückstände Quarz, Feldspat, Fluorit, Cuspidin, Granat, Pyroxen, Melilith und Mischungen davon enthalten.

6. Schnellhärtendes Zementsystem nach einem der vorherigen Ansprüche, wobei der Tonerdezement der DIN EN 14647 entspricht.

7. Schnellhärtendes Zementsystem nach einem der vorherigen Ansprüche, wobei 80 bis 90 MA.-% Tonererdezement enthalten sind.

8. Schnellhärtendes Zementsystem nach einem der vorherigen Ansprüche, wobei 10 bis 20 MA.-% lithiumhaltige Silikate enthalten sind.

9. Estrich, Mörtel oder Beton, enthaltend das schnellhärtende Zementsystem nach einem der Ansprüche 1 bis 8 und Zuschlagstoffe.

10. Estrich nach Anspruch 9 enthaltend
- 3 bis 70 MA.-% schnellhärtendes Zementsystem
- 30 bis 95 MA-% Gesteinskörnung.

11. Estrich nach Anspruch 9 oder 10, enthaltend zusätzlich Normalzement nach DIN EN 197-1.

12. Estrich nach einem der Ansprüche 9 bis 11 wobei der Gesteinskörnung eine Korngröße im Bereich 2 bis 8 mm aufweisen.
